# EUROPÄISCHE PATENTSCHRIFT

(11) **EP 3 804 975 B1**
(45) Veröffentlichungstag und Bekanntmachung des Hinweises auf die Patenterteilung: **22.12.2021**
(21) Anmeldenummer: 20198612.2
(22) Anmeldetag: 28.09.2020
(51) Int. Cl.: B32B 1/08, B32B 5/02, B32B 7/05, B32B 7/12, B32B 15/14, B32B 27/12, B32B 3/28, B32B 3/26

(54) **SUPERISOLIERUNGSSCHICHT EINES LEITUNGSROHRES SOWIE EIN DAMIT AUSGESTATTETES LEITUNGSROHR MIT ZWEI GEWELLTEN METALLROHREN**
SUPERINSULATION LAYER OF A PIPE AND A PIPE EQUIPPED WITH THE SAME AND TWO CORRUGATED METAL PIPES
COUCHE DE SUPERISOLATION D'UN TUYAU AINSI QU'UN TUYAU ÉQUIPÉ DU MÊME ET DE DEUX TUYAUX MÉTALLIQUES ONDULÉS

(30) Priorität: 10.10.2019 DE 102019127330
(43) Veröffentlichungstag der Anmeldung: 14.04.2021
(73) Patentinhaber: BRUGG Rohrsystem AG, 5314 Kleindöttingen (CH)
(72) Erfinder: ALBRECHT, Thomas, 30890 Barsinghausen (DE); POHL, Sylvia, 31515 Wunstorf (DE)
(74) Vertreter: Scheffler, Jörg

(56) Entgegenhaltungen:
- EP-B1- 0 326 923
- DE-A1- 10 211 074
- DE-A1-102006 057 663

## Beschreibung

Die Erfindung betrifft eine zumindest abschnittsweise gasdurchlässige Superisolierungsschicht zur thermischen Isolierung eines Innenrohres in einem aus dem Innenrohr und einem Außenrohr bestehenden Leitungsrohres, wobei die Superisolierungsschicht aus einem mehrlagigen Verbundmaterial mit zumindest einer Lage eines thermisch isolierenden Materials, insbesondere aus Vlies, und mit zumindest einer Lage eines reflektierenden Materials, insbesondere eine Metallfolie oder eine metallisierte Kunststofffolie, besteht. Weiterhin betrifft die Erfindung ein Leitungsrohr, insbesondere zum Transport von tiefkalten Medien, beispielsweise verflüssigte Gase, mit zwei konzentrisch und im Abstand zueinander angeordneten gewellten Metallrohren, wobei in dem Ringspalt zwischen den Metallrohren eine gewickelte Superisolierungsschicht aus wechselweise übereinander angeordneten Lagen eines isolierenden Materials und eines reflektierenden Materials vorgesehen und der Ringspalt evakuiert ist, wobei die Superisolierungsschicht aus einem mehrlagigen Verbundmaterial mit zumindest einer Lage des thermisch isolierenden Materials und mit zumindest einer Lage des reflektierenden Materials besteht.

Die EP 0 326 923 B1 beschreibt ein Leitungsrohr zum Transport von tiefkalten Medien, bestehend aus zwei konzentrisch und im Abstand zueinander angeordneten gewellten Metallrohren, wobei in dem evakuierten Ringspalt zwischen den Metallrohren eine wendelartig gewickelte Superisolierungsschicht angeordnet ist, die aus wechselweisen Lagen von Metallfolien oder metallbeschichteten Kunststofffolien und Folien, beispielsweise aus einem Kunststoffvlies, besteht, und wendelartig so aufgewickelt wird, dass sich die Bandkanten überlappen. Ein sich über die gesamte Rohrlänge erstreckender Hohlraum zwischen der Superisolierungsschicht und einer auf das innere gewellte Metallrohr wendelartig aufgewickelten Folie, beispielsweise aus Aluminium, wird durch einen Abstandshalter erreicht, der ebenfalls wendelförmig aufgewickelt ist. Unter tiefkalten Medien werden dabei Medien mit einer Temperatur unter 100 K verstanden, wie beispielsweise verflüssigte Gase wie Helium, Sauerstoff oder Stickstoff. Um auch bei großen Rohrlängen den zwischen der Superisolierungsschicht und den Wellentälern eingeschlossenen Hohlraum schnell evakuieren zu können, sind die Wellentäler des inneren Metallrohres durch eine Folie überdeckt. Zwischen der Folie und der innersten Lage der Superisolierungsschicht befindet sich ein sich über die gesamte Rohrlänge erstreckender Hohlraum, der durch den wendelartig auf die Folie aufgewickelten Abstandshalter gebildet ist, wodurch ein schnelles und vollständiges Evakuieren des Raumes zwischen dem inneren und äußeren Metallrohr ermöglicht wird.

Aus der DE 75 34 809 U1 ist ein Leitungsrohr mit einem Innenrohr und einem Außenrohr und einer im evakuierbaren Ringspalt angeordneten Isolierung bekannt, welche aus einer Isolierstoffschicht aus Kunststoffschaum, Kalziumsilikat, Kork, Glaswolle oder Mineralwolle besteht. Nachdem diese gegenüber dem Außenrohr beweglich an dem Innenrohr angeordnet ist, wird diese mit einer perforierten Aluminiumfolie wendeiförmig umwickelt und mit der Isolierstoffschicht verklebt. Durch die Perforierung der Aluminiumfolie wird eine Entgasung der Isolierstoffschicht ermöglicht und die Evakuierung des Ringspaltes erleichtert.

Die DE 38 03 112 A1 beschreibt ein Leitungsrohr mit einem Innenrohr und einem Außenrohr, welche eine Superisolierungsschicht einschließen. Die Superisolierungsschicht besteht aus wechselweisen Lagen von metallbeschichteten Folien und Vlies. Beim Aufwickeln der Superisolierungsschicht auf das Innenrohr werden je eine Metallfolie und eine Folie aus Kunststoffvlies, Keramikvlies oder Glasfaservlies gemeinsam gewickelt.

Die DE 29 17 844 A1 bezieht sich auf ein Leitungsrohr mit einem Innenrohr und einem Außenrohr, zwischen welchen eine thermische Isolierung angeordnet ist. Die thermische Isolierung besteht aus einer Superisolierung aus Metallfolien und Vliesen. Außerdem ist ein Restgase absorbierendes Material, beispielsweise Vlies, mit einem perforierten Blech als Träger vorgesehen.

Die DE 10 2006 057 663 A1 beschreibt eine Vakuumisolation von Behälterwandungen aus einer Vielzahl von Lagen einer Polyesterfolie oder Polyamidfolie. Die Folien sind an ihrer Oberfläche mit Aluminium bedampft, wodurch die Wärmeübertragung durch Strahlung unterbunden ist. Zwischen den Folien sind Abstandshalter vorgesehen, die zwischen den Folien einen Zwischenraum definieren. Der Zwischenraum ist evakuiert, wodurch die Konvektion im Zwischenraum weitgehend unterbunden ist. Die Abstandshalter sind möglichst filigran ausgeführt, wodurch die Wärmeleitung durch die Abstandshalter auf ein Minimum reduziert ist. Beispielsweise sind die Abstandshalter von einem Glasfasernetz gebildet.

Darüber hinaus beziehen sich auch die DE 19 36 609 A1, die DE 79 27 533 U1 sowie die DE 102 11 074 A1 jeweils auf ein Leitungsrohr mit einer Superisolationsschicht.

Grundsätzlich ist es bekannt, dass bei einem solchen Leitungsrohr die Superisolierungsschicht mit einer definierten Vorspannung gewickelt werden muss, um einen höchstmöglichen Isolierungseffekt zu erzielen. Dabei ist einerseits die Wickelspannung der Metallfolie zu begrenzen, um das Vliesmaterial des thermisch isolierenden Materials nicht unnötig zu komprimieren. Andererseits ist zu vermeiden, dass die Perforationen der Metallfolie durch das Vliesmaterial abgedeckt werden und dadurch der Gasdurchtritt unerwünscht beschränkt wird.

Der Erfindung liegt die Aufgabe zugrunde, eine wesentlich verbesserte Superisolierungsschicht zu schaffen. Weiterhin liegt der Erfindung die Aufgabe zugrunde, ein Leitungsrohr mit einer solchen verbesserten Superisolierungsschicht zu schaffen.

Die erstgenannte Aufgabe wird erfindungsgemäß mit einer Superisolierungsschicht gemäß den Merkmalen des Anspruches 1 gelöst. Die weitere Ausgestaltung der Erfindung ist den Unteransprüchen zu entnehmen.

Erfindungsgemäß ist also eine Superisolierungsschicht vorgesehen, bei der die Lagen des isolierenden Materials und des reflektierenden Materials durch punkt- und/oder linienförmige Kontaktflächen verbunden sind, die derart benachbart zu Durchgangsöffnungen angeordnet sind, dass diese im Bereich der Durchgangsöffnungen zugleich einen definierten Abstand der Lage des thermisch isolierenden Materials von der Lage des reflektierenden Materials festlegen und aufgrund der definierten Kontaktflächen der verschiedenen Lagen die gewünschte vorbestimmte relative Position auch in der gewickelten Position auf dem Innenrohr erhalten bleibt. Hierdurch wird erstmals eine definierte Relativposition der verschiedenen Lagen und Schichten des Verbundmaterials unabhängig von der Wickelspannung sichergestellt, indem diese bereits vor dem Wickeln auf das Innenrohr zu einem im Gebrauch unlösbaren Materialverbund miteinander verbunden sind. Während bei bekannten Verfahren, bei denen eine Lage des thermischen isolierenden Materials gemeinsam mit einer Lage des reflektierenden Materials auf das Innenrohr gewickelt werden muss und es dabei zu einer durchmesserabhängigen Verschiebung der verschiedenen Lagen kommt, bleibt die relative Zuordnung erfindungsgemäß jederzeit erhalten. Somit beschränkt sich die Erfindung keineswegs auf die praktische Erkenntnis, dass sich das Verbundmaterial einfacher wickeln lässt als gleichzeitig mehrere unabhängige Lagen verschiedener Materialien. Vielmehr liegt der Erfindung die Erkenntnis zugrunde, dass aufgrund der definierten Kontaktflächen der verschiedenen Lagen die gewünschte vorbestimmte relative Position auch in der gewickelten Position auf dem Innenrohr erhalten bleibt, wodurch sowohl die Gasdurchlässigkeit verbessert ist, indem die Öffnungen nicht versperrt werden, als auch die thermische Isolierung optimiert wird, weil die Vliesschicht nicht komprimiert wird.

Indem die Lagen im Bereich punkt- und/oder linienförmiger Kontaktflächen verbunden sind liegen die verschiedenen Lagen des Verbundmaterials außerhalb der Kontaktfläche spannungsfrei gegeneinander an. Somit ist ein Gasdurchlass auch in der Ebene zwischen den einzelnen Lagen gewährleistet.

Indem die Kontaktflächen derart benachbart zu den Durchgangsöffnungen angeordnet sind, dass diese im Bereich der Durchgangsöffnungen zugleich einen definierten Abstand der Lage des thermisch isolierenden Materials von der Lage des reflektierenden Materials festlegen, liegen die verschiedenen Lagen oder Schichten im Bereich der Kontaktflächen nicht unmittelbar, sondern in Abhängigkeit der Gestaltung der Kontaktfläche mit einem vorbestimmten Abstand zueinander, wodurch der Gasdurchtritt wesentlich optimiert ist.

Eine weitere ebenfalls besonders Erfolg versprechende Ausführungsform der Erfindung wird auch dadurch erreicht, dass die Kontaktflächen gleichverteilt an dem Verbundmaterial angeordnet sind, sodass die zwischen den einzelnen Lagen oder Schichten des Verbundmaterials wirkenden Kräfte, insbesondere beim Wickeln, über die Gesamtfläche gleichmäßig übertragen werden. Auf diese Weise wird vor allem einer unerwünschten Faltenbildung wirksam vorgebeugt.

Eine andere, ebenfalls besonders vorteilhafte Ausführungsform der Erfindung wird dadurch erreicht, dass die Lage des reflektierenden Materials mit einer Perforation bildenden Durchgangsöffnungen mit einem insbesondere einheitlichen Abstand zu benachbarten angeordneten Kontaktflächen ausgestattet ist. Dadurch werden die Durchgangsöffnungen zuverlässig von dem thermisch isolierenden Material getrennt, sodass deren Funktion jederzeit gewährleistet ist und insbesondere eine unerwünschte Abdeckung, beispielsweise durch einen Faltenwurf des isolierenden Materials, ausgeschlossen ist.

Die Durchgangsöffnungen könnten durch flächige, beispielsweise kreisförmige Durchbrechungen des reflektierenden Materials gebildet sein. Besonders vorteilhaft ist es hingegen, wenn die Durchgangsöffnungen durch linienförmige Einschnitte gebildet sind. Diese Einschnitte sind vorzugsweise so bemessen, dass aufgrund des Druckunterschiedes bei der Evakuierung des Zwischenraumes zwischen dem Außenrohr und dem Innenrohr ein von den Einschnitten begrenzten Flächenbereich aufklappen kann und dadurch die Durchgangsöffnung freigibt.

Eine andere, besonders bevorzugte Ausgestaltungsform der Erfindung wird dadurch erreicht, dass die Kontaktflächen durch Schweißpunkte und/oder Adhäsionshaftpunkte gebildet sind und so eine im Gebrauch untrennbare Einheit der verschiedenen Lagen des Verbundmaterials ermöglichen.

Dabei hat es sich als zweckmäßig erwiesen, wenn die Durchgangsöffnungen und/oder Kontaktflächen in einem regelmäßigen Raster an dem Verbundmaterial angeordnet sind, wobei sich das Verbundmaterial zwischen den Kontaktpunkten problemlos trennen und so für den jeweiligen Anwendungszweck konfektionieren lässt.

Die Erfindung ist nicht auf die Verbindung einer einzigen Lage des thermischen isolierenden Materials und einer einzigen Lage des reflektierenden Materials beschränkt. Vielmehr ist gemäß einer weiteren, besonders vorteilhaften Ausgestaltungsform die Lage des reflektierenden Materials zwischen mehreren Lagen des thermischen isolierenden Materials beidseitig eingeschlossen. Hierdurch wird das gegenüber Umgebungseinflüssen vergleichsweise empfindliche Material durch die beidseitige Vliesschicht zuverlässig geschützt und dadurch auch die Handhabung beim Bewickeln des Innenrohres vereinfacht.

Die zweitgenannte Aufgabe, ein verbessertes Leitungsrohr, insbesondere zum Transport von tiefkalten Medien, beispielsweise verflüssigte Gase, bestehend aus zwei konzentrisch und im Abstand zueinander angeordneten gewellten Metallrohren, wobei in dem Ringspalt zwischen den Metallrohren eine wendelartig gewickelte Superisolierungsschicht aus angeordnet und der Ringspalt evakuiert ist, zu schaffen, wird erfindungsgemäß noch dadurch gelöst, dass die Lagen des isolierenden Materials und des reflektierenden Materials durch punkt- und/oder linienförmige Kontaktflächen verbunden sind, die derart benachbart zu Durchgangsöffnungen angeordnet sind, dass diese im Bereich der Durchgangsöffnungen zugleich einen definierten Abstand der Lage des thermisch isolierenden Materials von der Lage des reflektierenden Materials festlegen und aufgrund der definierten Kontaktflächen der verschiedenen Lagen die gewünschte vorbestimmte relative Position auch in der gewickelten Position auf dem Innenrohr erhalten bleibt. Hierdurch ist die relative Position und Orientierung der beiden Schichten eindeutig festgelegt und verändert sich insbesondere auch nicht beim Bewickeln des Innenrohres. Zudem hat sich herausgestellt, dass selbst Schwankungen der Wickelspannung nicht zu einer Kompression der isolierenden Schicht und damit zu einer Verminderung der Isolierung führen.

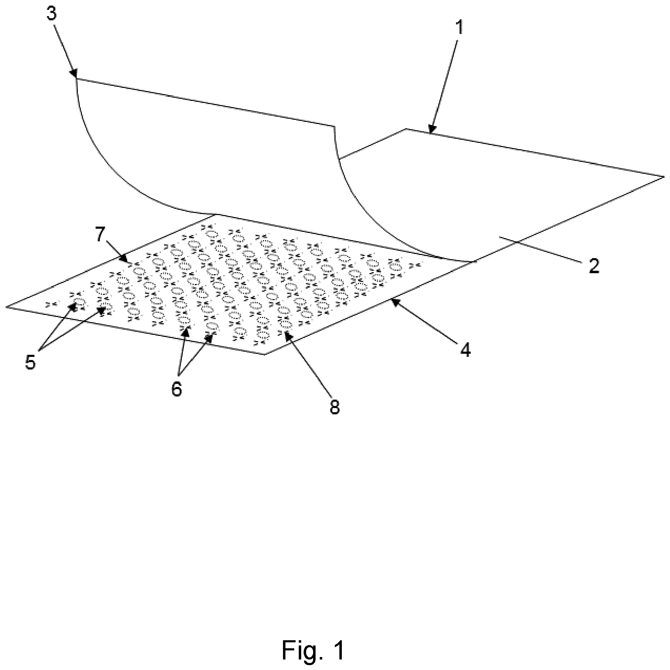

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer perspektivischen Darstellung ein mehrschichtiges Verbundmaterial 1 einer Superisolierungsschicht 2 zur thermischen Isolierung eines nicht gezeigten aus dem Innenrohr und einem Außenrohr bestehenden Leitungsrohres zum Transport von tiefkalten Medien. Hierzu hat das Verbundmaterial 1 zumindest eine Lage eines thermischen isolierenden Materials 3, insbesondere aus Vlies, und zumindest eine Lage eines durch eine Metallfolie gebildeten reflektierenden Materials 4. Wie zu erkennen ist, sind die Lagen durch mehrere in einem regelmäßigen Muster angeordnete punktförmige Kontaktflächen 5 verbunden, sodass diese gleichverteilt an dem Verbundmaterial 1 angeordnet sind und für eine zuverlässige Kraftübertragung zwischen den Schichten beim Bewickeln des Innenrohres sorgen. Weiterhin weist die durch das reflektierende Material 4 gebildete Schicht in einem entsprechend versetzten Muster angeordnete Perforationen 6 in Form einander kreuzender Einschnitte 7 auf, die aufgrund einer Druckdifferenz die entsprechenden Durchgangsöffnungen 8 bilden.

### BEZUGSZEICHENLISTE

- 1: Verbundmaterial
- 2: Superisolierungsschicht
- 3: isolierendes Material
- 4: reflektierendes Material
- 5: Kontaktflächen

- 6: Perforationen
- 7: Einschnitt
- 8: Durchgangsöffnung

## Patentansprüche

1. Eine zumindest abschnittsweise gasdurchlässige Superisolierungsschicht (2) zur thermischen Isolierung eines Innenrohres in einem aus dem Innenrohr und einem Außenrohr bestehenden Leitungsrohres, wobei die Superisolierungsschicht (2) aus einem mehrlagigen Verbundmaterial (1) mit zumindest einer Lage eines thermisch isolierenden Materials (3), insbesondere aus Vlies, und mit zumindest einer Lage eines reflektierenden Materials (4), insbesondere eine Metallfolie und/oder eine metallisierte Kunststofffolie, besteht, **dadurch gekennzeichnet, dass** die Lagen des isolierenden Materials (3) und des reflektierenden Materials (4) durch punkt- und/oder linienförmige Kontaktflächen (5) verbunden sind, die derart benachbart zu Durchgangsöffnungen (8) angeordnet sind, dass diese im Bereich der Durchgangsöffnungen (8) zugleich einen definierten Abstand der Lage des thermisch isolierenden Materials (3) von der Lage des reflektierenden Materials (4) festlegen und aufgrund der definierten Kontaktflächen (5) der verschiedenen Lagen die gewünschte vorbestimmte relative Position auch in der gewickelten Position auf dem Innenrohr erhalten bleibt.

2. Superisolierungsschicht (2) nach Anspruch 1, **dadurch gekennzeichnet, dass** die Kontaktflächen (5) gleichverteilt an dem Verbundmaterial (1) angeordnet sind.

3. Superisolierungsschicht (2) nach zumindest einem der vorhergehenden Ansprüche, **dadurch gekennzeichnet, dass** die Lage des reflektierenden Materials (4) mit einer Perforation (6) bildenden Durchgangsöffnungen (8) mit einem insbesondere einheitlichen Abstand zu benachbarten angeordneten Kontaktflächen (5) ausgestattet ist.

4. Superisolierungsschicht (2) nach Anspruch 3, **dadurch gekennzeichnet, dass** zumindest einzelne der Durchgangsöffnungen (8) durch linienförmige Einschnitte (7) gebildet sind.

5. Superisolierungsschicht (2) nach zumindest einem der vorhergehenden Ansprüche, **dadurch gekennzeichnet, dass** die punktförmigen Kontaktflächen (5) durch Schweißpunkte und/oder Adhäsionshaftpunkte gebildet sind und/oder die linienförmigen Kontaktflächen (5) durch Schweißlinien und/oder Adhäsionslinien gebildet sind.

6. Superisolierungsschicht (2) nach zumindest einem der vorhergehenden Ansprüche, **dadurch gekennzeichnet, dass** die Durchgangsöffnungen (8) und/oder Kontaktflächen (5) in einem regelmäßigen Raster an dem Verbundmaterial (1) angeordnet sind.

7. Superisolierungsschicht (2) nach zumindest einem der vorhergehenden Ansprüche, **dadurch gekennzeichnet, dass** die Lage des reflektierenden Materials (4) zwischen mehreren Lagen des thermischen isolierenden Materials (3) eingeschlossen ist.

8. Leitungsrohr, insbesondere zum Transport von tiefkalten Medien, mit zwei und im Abstand zueinander angeordneten gewellten Metallrohren, wobei in dem Ringspalt zwischen den Metallrohren eine gewickelte Superisolierungsschicht (2) aus wechselweise übereinander angeordneten Lagen eines isolierenden Materials (3) und eines reflektierenden Materials (4) vorgesehen und der Ringspalt evakuiert ist, wobei die Superisolierungsschicht (2) aus einem mehrlagigen Verbundmaterial (1) mit zumindest einer Lage des thermisch isolierenden Materials und mit zumindest einer Lage des reflektierenden Materials (4) besteht, **dadurch gekennzeichnet, dass** die Lagen des isolierenden Materials (3) und des reflektierenden Materials (4) durch punkt- und/oder linienförmige Kontaktflächen (5) verbunden sind, die derart benachbart zu Durchgangsöffnungen (8) angeordnet sind, dass diese im Bereich der Durchgangsöffnungen (8) zugleich einen definierten Abstand der Lage des thermisch isolierenden Materials (3) von der Lage des reflektierenden Materials (4) festlegen und aufgrund der definierten Kontaktflächen (5) der verschiedenen Lagen die gewünschte vorbestimmte relative Position auch in der gewickelten Position auf dem Innenrohr erhalten bleibt.

## Claims

1. Superinsulation layer (2) which is at least partially permeable to gas and which is intended to thermally insulate an internal pipe in a pipe consisting of the internal pipe and an external pipe, wherein the superinsulation layer (2) is composed of a multi-layered composite material (1) having at least one ply of a thermally insulating material (3), in particular composed of nonwoven, and having at least one ply of a reflective material (4), in particular a metal foil and/or a metallized plastics film, **characterized in that** the plies of the insulating material (3) and of the reflective material (4) are connected by punctiform and/or linear contact surfaces (5), which are arranged adjacent to passage openings (8) in such a way that they simultaneously set a defined distance between the ply of the thermally insulating material (3) and the ply of the reflective material (4) in the region of the passage openings (8), and, on account of the defined contact surfaces (5) of the various plies, the desired predetermined relative position remains unchanged even in the position when wound on the internal pipe.

2. Superinsulation layer (2) according to Claim 1, **characterized in that** the contact surfaces (5) are arranged so as to be uniformly distributed on the composite material (1).

3. Superinsulation layer (2) according to at least one of the preceding claims, **characterized in that** the ply of the reflective material (4) is equipped with passage openings (8), which form a perforation (6), at an in particular uniform distance from adjacent contact surfaces (5).

4. Superinsulation layer (2) according to Claim 3, **characterized in that** at least individual ones of the passage openings (8) are formed by linear incisions (7).

5. Superinsulation layer (2) according to at least one of the preceding claims, **characterized in that** the punctiform contact surfaces (5) are formed by weld points and/or adhesion points, and/or the linear contact surfaces (5) are formed by weld lines and/or adhesion lines.

6. Superinsulation layer (2) according to at least one of the preceding claims, **characterized in that** the passage openings (8) and/or contact surfaces (5) are arranged in a regular grid on the composite material (1) .

7. Superinsulation layer (2) according to at least one of the preceding claims, **characterized in that** the ply of the reflective material (4) is enclosed between a plurality of plies of the thermally insulating material (3).

8. Pipe, in particular for the transport of cryogenic media, having two corrugated metal pipes arranged at a distance from one another, wherein a wound superinsulation layer (2) composed of plies of an insulating material (3) and of a reflective material (4) which are arranged alternately one on top of the other is provided in the ring gap between the metal pipes and the ring gap is evacuated, wherein the superinsulation layer (2) is composed of a multi-layered composite material (1) having at least one ply of the thermally insulating material and having at least one ply of the reflective material (4), **characterized in that** the plies of the insulating material (3) and of the reflective material (4) are connected by punctiform and/or linear contact surfaces (5), which are arranged adjacent to passage openings (8) in such a way that they simultaneously set a defined distance between the ply of the thermally insulating material (3) and the ply of the reflective material (4) in the region of the passage openings (8), and, on account of the defined contact surfaces (5) of the various plies, the desired predetermined relative position remains unchanged even in the position when wound on the internal pipe.

## Revendications

1. Couche de super-isolation (2) perméable aux gaz au moins par portions et destinée à isoler thermiquement un tube intérieur dans une conduite comprenant le tube intérieur et un tube extérieur, la couche de super-isolation (2) étant en un matériau composite multicouche (1) pourvu d'au moins une couche d'un matériau thermiquement isolant (3), en particulier un non-tissé, et d'au moins une couche d'un matériau réfléchissant (4), en particulier une feuille métallique et/ou un film de matière synthétique métallisé, **caractérisée en ce que** les couches du matériau isolant (3) et du matériau réfléchissant (4) sont reliées par des surfaces de contact ponctuelles et/ou linéaires (5) qui sont disposées de manière adjacente à des ouvertures traversantes (8) de sorte que celles-ci définissent, dans la région des ouvertures traversantes (8), en même temps une distance définie entre la couche du matériau thermiquement isolant (3) et la couche du matériau réfléchissant (4) et, sur la base des surfaces de contact définies (5) des différentes couches, la position relative prédéterminée souhaitée reste également conservée dans la position enroulée sur le tube intérieur.

2. Couche de super-isolation (2) selon la revendication 1, **caractérisée en ce que** les surfaces de contact (5) sont de manière régulièrement répartie sur le matériau composite (1).

3. Couche de super-isolation (2) selon l'une au moins des revendications précédentes, **caractérisée en ce que** la couche de matériau réfléchissant (4) est pourvue d'ouvertures traversantes (8) qui forment une perforation (6) et qui sont situées à une distance notamment uniforme des surfaces de contact (5) disposées de manière adjacente.

4. Couche de super-isolation (2) selon la revendication 3, **caractérisée en ce qu'**au moins certaines des ouvertures traversantes (8) sont formées par des incisions linéaires (7).

5. Couche de super-isolation (2) selon l'une au moins des revendications précédentes, **caractérisée en ce que** les surfaces de contact ponctuelles (5) sont formées par des points de soudure et/ou des points de collage et/ou les surfaces de contact linéaires (5) sont formées par des lignes de soudure et/ou des lignes de collage.

6. Couche de super-isolation (2) selon l'une au moins des revendications précédentes, **caractérisée en ce que** les ouvertures traversantes (8) et/ou les surfaces de contact (5) sont disposées suivant une trame régulière sur le matériau composite (1).

7. Couche de super-isolation (2) selon l'une au moins des revendications précédentes, **caractérisée en ce que** la couche du matériau réfléchissant (4) est incluse entre plusieurs couches du matériau thermiquement isolant (3).

8. Canalisation, destinée notamment au transport de milieux cryogéniques, ladite canalisation comprenant deux tubes métalliques ondulés disposés à distance l'un de l'autre, une couche de super-isolation enroulée (2), qui comprend des couches d'un matériau isolant (3) et des couches d'un matériau réfléchissant (4) qui sont disposées alternativement les unes au-dessus des autres, étant prévue dans l'espace annulaire ménagé entre les tubes métalliques et un vide étant généré dans l'espace annulaire, la couche de super-isolation (2) comprenant un matériau composite multicouche (1) pourvu d'au moins une couche du matériau thermiquement isolant et d'au moins une couche du matériau réfléchissant (4), **caractérisée en ce que** les couches du matériau isolant (3) et du matériau réfléchissant (4) sont reliées par des surfaces de contact ponctuelles et/ou linéaires (5) qui sont disposées de manière adjacente à des ouvertures traversantes (8) de sorte que lesdites surfaces de contact définissent, dans la région des ouvertures traversantes (8), en même temps une distance définie entre la couche du matériau thermiquement isolant (3) et la couche du matériau réfléchissant (4) et, sur la base des surfaces de contact définies (5) des différentes couches, la position relative prédéterminée souhaitée reste également conservée dans la position enroulée sur le tube intérieur.
